(19) Europäisches Patentamt
European Patent Office
Office européen des brevets

(11) EP 0 694 089 B1

(12) **EUROPÄISCHE PATENTSCHRIFT**

(45) Veröffentlichungstag und Bekanntmachung des Hinweises auf die Patenterteilung:
**04.11.1998 Patentblatt 1998/45**

(51) Int Cl.$^6$: **C25D 15/02**, H01M 4/82, H01M 4/73, H01M 4/68, H01M 10/54

(21) Anmeldenummer: **95906888.3**

(22) Anmeldetag: **27.01.1995**

(86) Internationale Anmeldenummer:
**PCT/DE95/00112**

(87) Internationale Veröffentlichungsnummer:
**WO 95/22642 (24.08.1995 Gazette 1995/36)**

(54) **VERFAHREN ZUR HERSTELLUNG EINER GEHÄRTETEN BLEIBATTERIEELEKTRODE**

PROCESS FOR PRODUCING A HARDENED LEAD BATTERY ELECTRODE

PROCEDE DE FABRICATION D'UNE ELECTRODE DE BATTERIE AU PLOMB DURCIE

(84) Benannte Vertragsstaaten:
**AT BE CH DE DK ES FR GB GR IE IT LI LU MC NL PT SE**

(30) Priorität: **16.02.1994 DE 4404817**

(43) Veröffentlichungstag der Anmeldung:
**31.01.1996 Patentblatt 1996/05**

(73) Patentinhaber: **Warlimont, Hans**
**63579 Freigericht (DE)**

(72) Erfinder:
- **WARLIMONT, Hans**
  **D-63579 Freigericht (DE)**
- **OLPER, Marco**
  **I-0159 Mailand (IT)**
- **DREFAHL, Klaus**
  **D-60271 Frankfurt (DE)**
- **UEBERSCHAER, Armin**
  **D-60271 Frankfurt (DE)**

(74) Vertreter: **Goddar, Heinz J., Dr.**
**FORRESTER & BOEHMERT**
**Franz-Joseph-Strasse 38**
**80801 München (DE)**

(56) Entgegenhaltungen:
EP-A- 0 038 366          EP-A- 0 290 779
DE-A- 2 164 050          DE-A- 2 540 937
US-A- 3 552 000          US-A- 4 235 681

- CHEMICAL ABSTRACTS, vol. 89, no. 2, Juli 1978 Columbus, Ohio, US; abstract no. 13886f, PINI G. C. 'Deposition of dispersion-hardened lead coatings' & OBERFLAECHE-SURF, Bd. 19,Nr. 3, 1978 Seite 54-60
- CHEMICAL ABSTRACTS, vol. 87, no. 1, 5.September 1977 Columbus, Ohio, US; abstract no. 75608j, PINI G. C. ET AL 'Electrodeposition of dispersion-hardened lead coatings' & BELG.-NED. TIJDSCHR. OPERVLAKTE TECH. MET., Bd. 21,Nr. 5, 1977 Seiten 158-65,
- TRANSACTIONS OF THE INSTITUTE OF METAL FINISHING, Bd. 68,Nr. 4, November 1990 LONDON GB, Seiten 124-128, J. P. CELIS ET AL 'Electrodeposited composite tin-lead coatings'

**Beschreibung**

Die Erfindung bezieht sich auf ein Verfahren zur Herstellung einer gehärteten Bleibatterieelektrode, in deren aus Blei bestehender Matrix mehrere, in Blei unlösliche, feinteilige Feststoffe dispers verteilt sind.

Plattengitter für Bleiakkumulatoren werden hauptsächlich durch Schwerkraftguß in Kokillen von Hand oder mit Gießmaschinen und durch Druckguß mit Warmkammer- oder Kaltkammer-Druckgußmaschinen hergestellt. Bedeutung hat auch der kontinuierliche Schwerkraftguß mit einer Trommelgießmaschine und die nachfolgende Gitterfertigung nach der Streckmetalltechnik. Weniger verbreitet sind das Stanzen und Prägen von Plattengittern und das Auftragschweißen von vorgearbeiteten Gitterteilen, z.B. stranggepreßten Stäben mittels Schwerkraft- oder Druckgießens. Diese Herstellungsverfahren weisen jeweils spezifische Nachteile auf. Beim Schwerkraftguß ist die minimale Plattendicke auf 1 mm begrenzt, und die Plattendicke ist u.a. wegen unregelmäßigen Abtrags der Beschichtung in der Gußform nicht konstant. Das Druckguß-Verfahren erfordert eine bestimmte Viskosität der Metallschmelze. Daher sind beispielsweise Blei-Antimon-Legierungen mit einem Gehalt von 3 bis 8 % Antimon nicht verarbeitungsfähig. Beim kontinuierlichen Schwerkraftguß in der Trommelgießmaschine ist die minimale Plattendicke auf ca. 1 mm begrenzt. Bei der Gitterherstellung durch Stanzen und Prägen ist die Ausnutzung des Ausgangsmaterials vergleichsweise gering, und die Möglichkeiten des Gitter-Designs sind begrenzt. Die Herstellung eines Gitters nach der Streckmetalltechnik erlaubt keine vollständige Optimierung der Gittergeometrie.

Als Werkstoffe für die Bleibatterieelektroden werden Blei-Legierungen verwendet, denn die Streckgrenze (statische Festigkeit) und die Kriechbeständigkeit (Zeitstandfestigkeit) von reinem Blei sind zu gering.

Um die Festigkeit von Blei zu erhöhen, wird es mit Elementen wie zum Beispiel Antimon oder Kalzium und Zinn legiert, wobei Mischkristall- und Ausscheidungshärtung wirksam werden (W. Hofmann, Blei und Bleilegierungen, Springer-Verlag, Berlin/Göttingen/Heidelberg 1962). Diese Legierungselemente erhöhen aber grundsätzlich den elektrischen Widerstand und beeinflussen in vielen Fällen die elektrochemischen Eigenschaften wie das Korrosionsverhalten und das Batterieverhalten durch Gasbildung nachteilig.

Vor diesem Hintergrund wurden Verfahren entwickelt, um die Festigkeit von Bleibatterieelektroden durch Dispersionshärtung zu erhöhen, wobei in Blei im wesentlichen unlösliche Teilchen von vorbestimmter Größe und möglichst geringem mittlerem Abstand dispers in den Bleiwerkstoff eingebaut werden müssen. In der US-Patentschrift 3,253,912 und von A. Lloyd, E.R. Newson, Dispersion strengthened lead: developments and applications in the chemical industry, Proc. Conf. on Lead, 1968, 255-267 wurden verschiedene pulvermetallurgische Verfahren zur Erzeugung einer Bleioxid-Dispersion in Blei vorgeschlagen. Von M.M. Tilman, R.L. Crosby, D.H. Desy, Dispersion strengthening of lead by coprecipitation, Report BM Rl 7570, U.S. Department of the Interior, Washington 1971 wurde ein pulvermetallurgisches Verfahren zur Herstellung einer Aluminiumoxid-Dispersion in Blei beschrieben. Diese Verfahren haben aber alle den Nachteil nicht-optimaler Teilchengröße und -dispersion und unverhältnismäßig hoher Kosten und führen außerdem zu technischen Problemen wie ungünstigem elektrochemischem Verhalten und mangelnder Schweißbarkeit. Damit sind bei diesen Methoden für die technische Anwendung, zum Beispiel in Batterien, wirtschaftliche und technische Schwierigkeiten gegeben.

Grundsätzlich können aus allen Metallen, bei denen eine galvanische Abscheidung möglich ist, wie zum Beispiel Kupfer, Nickel, Eisen, Zink und Blei, dünne Metallschichten mit darin eingelagerten, dispers verteilten Phasen durch Niederschlag auf massiven Körpern hergestellt werden.

Nach dem heutigen Stand der Technik werden in galvanische Schichten Teilchen aus Graphit, PTFE, $Al_2O_3$, SiC und anderen Stoffen eingebracht (Dispersionsüberzüge), indem sie aus einer Suspension im Elektrolyten unter kontrollierten Bedingungen gleichzeitig mit dem Metall auf dem Substrat abgeschieden werden. Dieser Stand der Technik führte zu zahlreichen Arbeiten über Verfahren zur Verbesserung der Eigenschaften von galvanisch abgeschiedenen Dispersionsüberzügen. Die Dispersionsüberzüge finden Anwendung als funktionelle Oberflächenschichten, insbesondere als Verschleißschutzschichten mit Nickel als Metallmatrix. Angestrebt wird in vielen Fällen ein hoher Anteil der dispers eingebauten Phase (Dispersoid) bei möglichst gleichmäßiger Verteilung des Dispersoids in der Metallmatrix. So werden in der DE-AS 22 36 443 eine Aminoorganosiliziumverbindung, in der DE-AS 26 43 758 eine kationische sowie eine nicht-ionische Fluorkohlenstoffverbindung, in der DE-AS 26 44 035 Imidazolinhydroxide und in der DE-AS 26 46 881 Dimethylaminoxide als Zusätze zur Erhöhung der Abscheiderate der dispers eingebauten Komponente vorgeschlagen.

Von Wiener et al. (Plating 4, 1970, Seite 3.5.8 bis 3.6.1) wurde die Härtung von elektrolytisch abgeschiedenem Blei und Blei-Legierungen durch die Verwendung spezieller Additive und die Einlagerung von Dispersoiden beschrieben. Von den untersuchten Additiven erwies sich die Kombination von Ligninsulfonsäure und Cumarin als am wirkungsvollsten. Nur durch die Zugabe von $TiO_2$ mit einer mittleren Korngröße von 0,03 bis 0,01 um erzielten sie die gewünschte Härte-Steigerung. Die Stromdichte betrug 270 bis 540 A/m$^2$.

In der japanischen Offenlegungsschrift JP-0-47 11264 wird ein Verfahren zur elektrolytischen Herstellung von Beschichtungen und Galvanoplastiken aus Blei-Werkstoffen unter Verwendung eines Elektrolyten beschrieben, der Pb-Fluoroborid, Pb-Fluorosilikat oder Pb-Sulfamat, 0,005 bis 5 g/l Kupfer und wahlweise 0,025 bis 5 g/l eines hochmolekularen Polyacrylamides enthält. Die Lösung wird mit einem Magnetrührer gerührt. Die Blei-Abscheidung wird mit Bleiplatten als Anode, Stahlplatten als Kathode und unter einer Stromdichte von 500 bis 1000 A/m² durchgeführt.

Nach heutiger Auffassung begünstigen Blei-Werkstoffe, die Metalle mit niedriger Wasserstoffüberspannung enthalten, Selbstentladung durch Wasserstoffentwicklung an der negativen Elektrode. Blei selbst besitzt eine außerordentlich hohe Wasserstoffüberspannung. Wird deshalb die Bleielektrode in einer Elektrolytlösung mit einem anderen Metall mit einer niedrigen Wasserstoffüberspannung verbunden, so tritt an diesem Metall entsprechend stärkere Wasserstoffentwicklung auf und die Bleielektrode wird entsprechend schneller entladen. Das gilt auch für galvanisch auf der Elektrode abgeschiedene Metalle (Bildung von Lokalelementen). Insbesondere die Metalle mit sehr niedriger Wasserstoffüberspannung (Edelmetalle, Silber, Nickel, Kupfer) können die Wasserstoffentwicklung so stark erhöhen, daß starke Blasenbildung einsetzt, worauf die Bezeichnung "Nachkochmetalle" zurückgeht (Handbuch "Bleiakkumulatoren", Varta Batterie AG (Hrsg.), VDI-Verlag, Düsseldorf 1986). Daher erscheint der Einsatz eines kupferhaltigen Bleibatteriewerkstoffs für die positive Elektrode als nicht sinnvoll.

Ziel der Erfindung ist ein Verfahren zur Herstellung einer gehärteten Bleibatterieelektrode mit gegenüber reinem Blei und bisher verwendeten Blei-Legierungen verbesserten Eigenschaften, die in technisch brauchbar kurzen Zeiten wirtschaftlich hergestellt werden kann.

Dies wird erfindungsgemäß dadurch erreicht, daß während einer elektrolytischen Bleiabscheidung die im Elektrolyten gelösten oder suspendierten Feststoffe in die Bleimatrix eingebaut werden, daß durch eine geeignete Ausgestaltung der elektrisch leitenden Oberflächenbereiche der Kathode während der Abscheidung zugleich die Formgebung erfolgt, daß der Elektrolyt durch Einleiten von Luft durch eine Lochplatte im Boden des Elektrolytgefäßes stark bewegt wird, daß die Stromdichte 100 bis 2000 A/m², vorzugsweise 600 bis 2000 A/m², beträgt, daß die elektrochemische Zelle aus einer Kathode sowie einer Cu/Ta/Pt-Anode besteht und daß eine HBF$_4$-Lösung sowie Blei, Blei enthaltender Abfallstoff und/oder entschwefelte Bleibatterie-Elektrolytpaste als Rohstoffe zur Herstellung eines Elektrolyten verwendet werden, welcher PbO, Pb(OH)$_2$ oder PbCO$_3$ enthält.

Unter "geeigneter Ausgestaltung der elektrisch leitenden Oberflächenbereiche der Kathode" ist zu verstehen, daß die elektrisch leitenden Oberflächenbereiche der Kathode ein bestimmtes Muster bilden, welches der gewünschten Form der abgeschiedenen Batterieelektrode entspricht.

Im Vergleich zu herkömmlichen Elektroden für Bleibatterien weisen die nach dem erfindungsgemäßen Verfahren hergestellten dispersionsgehärteten Bleibatterieelektroden verbesserte mechanische Eigenschaften und einen verringerten elektrischen Widerstand auf. Die statische Festigkeit und die zeitstandfestigkeit werden erhöht, was eine Verringerung des tragenden Querschnittes der Elektroden ermöglicht. Diese Querschnittsverminderung erlaubt eine Erhöhung der gewichtsbezogenen Energie-Speicherdichte, ohne die elektrochemischen Eigenschaften der Batterieelektrode negativ zu beeinflussen. Dabei sind einer Querschnittsverminderung, im Gegensatz zu den herkömmlichen Batterieelektroden, keine Grenzen aufgrund des Herstellungsverfahrens gesetzt. Das erfindungsgemäße Verfahren gewährleistet eine rasche und gleichmäßige Abscheidung des Blei-Werkstoffs. Die kostengünstige Herstellung einer Bleibatterieelektrode ist so möglich. Denn durch die direkte Formgebung und technisch brauchbare Gefüge- und Oberflächenqualität der abgeschiedenen Batterieelektrode ist eine aufwendige und teuere Nachbearbeitung nicht erforderlich. Zudem können Dicke und Formgebung der Batterieelektrode in weiten Grenzen variiert werden, wodurch sich die Möglichkeit der maximalen Pastenausnutzung durch eine Optimierung der Dicke und der Kontaktfläche mit der Elektrode ergibt. Ferner ergibt sich durch das erfindungsgemäße Verfahren die Möglichkeit, den Anteil der in die Bleimatrix eingebauten Feststoffe für eine gegebene Zusammensetzung des Elektrolyten durch die Einstellung einer bestimmten Stromdichte zu variieren. Denn es hat sich gezeigt, daß z.B. der in der Bleimatrix eingebaute relative Kupferanteil, bezogen auf den Kupfer-Gehalt der Elektrolytlösung, mit geringerer Stromdichte zunimmt.

Die der Erfindung zugrundeliegende Aufgabe wird ferner durch ein Verfahren gelöst, bei dem während einer elektrolytischen Bleiabscheidung die im Elektrolyten gelösten oder suspendierten Feststoffe in die Bleimatrix eingebaut werden, bei dem durch eine geeignete Ausgestaltung der elektrisch leitenden Oberflächenbereiche der Kathode während der Abscheidung zugleich die Formgebung erfolgt, bei dem der Elektrolyt durch Einleiten von Luft durch eine Lochplatte im Boden des Elektrolytgefäßes stark bewegt wird, bei dem die Stromdichte 100 bis 2000 A/m², vorzugsweise 600 bis 2000 A/m², beträgt, bei dem die elektrochemische Zelle aus einer Kathode, einem Diaphragma sowie einer Graphit-Anode besteht und bei dem eine Fe(BF$_4$)$_2$/Fe(BF$_4$)$_3$-Lösung sowie Blei, Blei enthaltender Abfallstoff und/oder Bleischrott als Rohstoffe zur Herstellung des Elektrolyten verwendet werden.

Mit dieser Variante des erfindungsgemäßen Verfahrens können in besonders vorteilhafter Weise bestimmte Abfallstoffe, wie z.B. verbrauchte Bleibatterieelektroden oder Elektrodenpaste, als Rohstoffe zur Herstellung des Elektrolyten verwendet werden, was eine weitere Einsparung an Kosten für die Herstellung abgeschiedener Bleibatterieelektroden bedeutet.

In weiterer Ausgestaltung der Erfindung ist es vorgesehen, daß 50 bis 300 g/l Pb$^{++}$, 50 bis 200 g/l freies

HBF$_4$ und 1 bis 5 g/l H$_3$PO$_4$ im Elektrolyten enthalten sind. Mit der Zugabe von H$_3$PO$_4$ wird die Bildung von PbO$_2$ in vorteilhafter Weise verhindert.

In weiterer Ausgestaltung der Erfindung ist es vorgesehen, daß 50 bis 200 g/l Pb$^{++}$, 10 bis 50 g/l Fe$^{++}$, 0,1 bis 5 g/l Fe$^{+++}$ und 10 bis 100 g/l freies HBF$_4$ im Elektrolyten enthalten sind. Mit der Zugabe der Eisenionen wird das Kristallwachstum in vorteilhafter Weise beeinflußt.

In weiterer Ausgestaltung der Erfindung ist es vorgesehen, daß die Stromdichte 1100 bis 2000 A/m$^2$ beträgt. Diese sehr hohen Stromdichten gewährleisten sehr hohe Abscheideraten und damit sehr kurze Herstellungszeiten der Batterieelektrode.

In weiterer Ausgestaltung der Erfindung ist es vorgesehen, daß durch eine geeignete Formgebung der Kathode oder eine isolierende Abdeckung der Kathode in einem bestimmten Muster der abgeschiedene Werkstoff an den elektrisch leitenden Oberflächenbereichen der Kathode die Form eines Gitters ergibt.

In weiterer Ausgestaltung der Erfindung ist es vorgesehen, daß dem Elektrolyten Gelatine, Leim, β-Naphtol, Resorzin, Kalziumligninsulfonat und/oder Pepton in einer Konzentration von je 0,1 bis 2 g/l als Additiv zugegeben wird. Die Zugabe dieser Additive gewährleistet eine besonders gleichmäßige Abscheidung des Bleis und des Feststoffs.

In weiterer Ausgestaltung der Erfindung ist es vorgesehen, daß dem Elektrolyten ein Polyacrylsäureamid in einer Konzentration von 0,05 bis 5 g/l als zusätzliches Additiv zugegeben wird. Die Zugabe dieses Additivs begünstigt die gleichmäßige Abscheidung des Bleis und des Feststoffs.

In weiterer Ausgestaltung der Erfindung ist es vorgesehen, daß als Feststoff die Verbindung Y$_2$O$_3$, Al$_2$O$_3$, ZrO$_2$, SiO$_2$, TiO$_2$, SiC, WC, TiC, BaSO$_4$, BN und/oder Si$_3$N$_4$ in einer Konzentration im Elektrolyten von je 5 bis 150 g/l und/oder das Metall Sn, As, Sb, Bi, Cu, Se, Te und/oder Ag in einer Konzentrat im Elektrolyten von je 0,01 bis 5 g/l verwendet wird.

In weiterer Ausgestaltung der Erfindung ist es vorgesehen, daß das Metall Sn, As, Sb, Bi, Cu, Se, Te und/oder Ag in einer Konzentration im Elektrolyten von je 0,01 bis 5 g/l verwendet wird.

in weiterer Ausgestaltung der Erfindung ist es vorgesehen, daß die Verbindung Y$_2$O$_3$, Al$_2$O$_3$, ZrO$_2$, SiO$_2$, TiO$_2$, SiC, WC, TiC, BaSO$_4$, BN und/oder Si$_3$N$_4$ in einer Korngröße von 0,005 bis 5 μm vorliegt.

In weiterer Ausgestaltung der Erfindung ist es vorgesehen, daß die elektrolytische Bleiabscheidung bei Temperaturen zwischen 30 und 90°C durchgeführt wird.

in weiterer Ausgestaltung der Erfindung ist es vorgesehen, daß die Kathode aus einer Platte aus einem elektrischen Isolatorwerkstoff mit darauf aufgebrachten elektrisch leitenden Bahnen besteht, auf denen sich der Bleiwerkstoff abscheidet und deren Anordnung damit die Formgebung bestimmt.

In weiterer Ausgestaltung der Erfindung ist es vorgesehen, daß als elektrisch leitende Bahn eine Kupfer-Bahn verwendet wird, die durch Auslaugen einer mit einer Maske abgedeckten und auf dem elektrischen Isolatorwerkstoff aufgebrachten Kupfer-Schicht hergestellt wird, wobei die Herstellung der Maske auf phototechnischem Weg erfolgt.

In weiterer Ausgestaltung der Erfindung ist es vorgesehen, daß die elektrolytisch abgeschiedene, gehärtete Bleielektrode mit reinem Blei nachbeschichtet wird. Durch die Nachbeschichtung mit reinem Blei, z.B. Feinblei, wird die Korrosionsbeständigkeit der Bleielektrode verbessert.

Der Gegenstand der Erfindung wird nachfolgend anhand von Beispielen näher erläutert.

Beispiel 1

Als ein Rohstoff zur Herstellung der Elektrolyse-Lösung wird PbO eingesetzt, das in einem Trommelmischer in HBF$_4$ gelöst wird. Es entsteht Pb(BF$_4$)$_2$:

$$2\ HBF_4 + PbO \rightarrow Pb(BF_4)_2 + H_2O$$

Aus der wäßrigen Pb(BF$_4$)$_2$-Lösung, die 150 g/l Pb$^{++}$, 100 g/l freies HBF$_4$, 2,5 g/l H$_3$PO$_4$, 0,6 g/l Leim sowie 0,4 g/l Kalziumligninsulfonat enthält, wird in einer Elektrolysezelle das Blei an einer Kathode abgeschieden, die aus einem Epoxidharzträger und darauf in Form eines Gitters aufgebrachten Kupferbahnen besteht. An einer Anode, die aus einem Kupfer/Tantal/Platin-Draht besteht, wird Sauerstoff freigesetzt:

$$Pb(BF_4)_2 + H_2O \rightarrow Pb + 2\ HBF_4 + 1/2\ O_2$$

Der im Elektrolyten suspendierte Feststoff, SiC-Pulver mit einer mittleren Partikelgröße von 1 μm und in einer Konzentration von 50 g/l oder Kupfer in einer Konzentration von 0,4 g/l, wird durch Einleiten von Luft durch eine Lochplatte im Boden des Elektrolytgefäßes in Schwebe gehalten und ca. 10 mal pro Stunde umgewälzt. Die elektrolytische Bleiabscheidung wird bei einer Temperatur von 35 bis 45°C und bei einer Stromdichte von 800 und 1200 A/m$^2$ durchgeführt. Mit diesem Verfahren werden dispersionsgehärtete Bleibatterieelektroden von 0,3 bis 0,6 mm Dicke hergestellt. Die Dispersoid-Gehalte in der Bleimatrix betragen bis zu 4 Masse-% SiC oder bis zu 0,8 Masse-% Kupfer. Der Einbau der Dispersoide in die Bleibatterieelektrode hat eine deutliche Festigkeitssteigerung gegenüber einer Elektrode aus reinem Blei zur Folge. Während die Elektrode aus reinem Blei einen Härtewert HB(19/62,5/30) von 4 aufweist, erreichen die dispersionsgehärteten Bleibatterieelektroden Härtewerte von 8 bis 10 (SiC-Dispersoide) und 20 bis 24 (Kupfer-Dispersoide).

Beispiel 2

Als ein Rohstoff zur Herstellung der Elektrolyse-Lösung wird Bleischrott in Form von alten Bleibatterieelektroden eingesetzt, die in einem Trommelmischer in $Fe(BF_4)_3$ gelöst werden. Es entsteht $Pb(BF_4)_2$:

$$2\,Fe(BF_4)_3 + Pb \rightarrow Pb(BF_4)_2 + 2\,Fe(BF_4)_2$$

Aus der wäßrigen $Pb(BF_4)_2$-Lösung, die 100 g/l $Pb^{++}$, 30 g/l $Fe^{++}$, 1 g/l $Fe^{+++}$, 30 g/l freies $HBF_4$ sowie 1 g/l Leim enthält, wird in einer Elektrolysezelle das Blei an einer Kathode abgeschieden:

$$Pb(BF_4)_2 \rightarrow Pb + 2\,BF_4^-$$

Die Kathode besteht aus einem Epoxidharzträger und darauf in Form eines Gitters aufgebrachten Kupfer-Bahnen. An einer Graphit-Anode, die durch ein Diaphragma von der Kathode getrennt ist, wird Eisen oxidiert:

$$Fe(BF_4)_2 + BF_4^- \rightarrow Fe(BF_4)_3$$

Der im Elektrolyten suspendierte Feststoff, SiC-Pulver mit einer mittleren Partikelgröße von 1 μm und in einer Konzentration von 50 g/l oder Kupfer in einer Konzentration von 0,4 g/l, wird durch Einleiten von Luft durch eine Lochplatte im Boden des Elektrolytgefäßes in Schwebe gehalten und ca. 10 mal pro Stunde umgewälzt. Die elektrolytische Bleiabscheidung wird bei einer Temperatur von 35 bis 45°C und bei einer Stromdichte von 800 und 1200 A/m$^2$ durchgeführt. Es werden dispersionsgehärtete Bleibatterieelektroden von 0,3 bis 0,6 mm Dicke hergestellt. Die Dispersoid-Gehalte in der Bleimatrix betragen bis zu 4 Masse-% SiC oder 0,8 Masse-% Kupfer. Der Einbau der Dispersoide in die Bleibatterieelektrode bewirkte gegenüber einer Elektrode aus reinem Blei eine deutliche Festigkeitssteigerung. Der Härtewert der Elektrode aus reinem Blei HB(19/62,5/30) beträgt 4. Demgegenüber weisen die dispersionsgehärteten Bleibatterieelektroden Härtewerte HV von 8 bis 10 (SiC-Dispersoide) und 20 bis 24 (Kupfer-Dispersoide) auf. Elektrochemische Messungen zeigen, daß die Wasserstoffüberspannung an den mit Cu dispersionsgehärteten Elektroden im Rahmen der erreichbaren Maßgenauigkeit nicht signifikant erniedrigt wird, und zwar sowohl gegenüber Blei als auch gegenüber handelsüblichen Bleibatterieelektrodenwerkstoffen.

**Patentansprüche**

1. Verfahren zur Herstellung einer gehärteten Bleibatterieelektrode, in deren aus Blei bestehender Matrix mehrere, in Blei unlösliche, feinteilige Feststoffe dispers verteilt sind, dadurch gekennzeichnet,

   a) daß während einer elektrolytischen Bleiabscheidung die im Elektrolyten gelösten oder suspendierten Feststoffe in die Bleimatrix eingebaut werden und daß durch eine geeignete Ausgestaltung der elektrisch leitenden Oberflächenbereiche der Kathode während der Abscheidung zugleich die Formgebung erfolgt,

   b) daß der Elektrolyt durch Einleiten von Luft durch eine Lochplatte im Boden des Elektrolytgefäßes stark bewegt wird und daß die Stromdichte 100 bis 2000 A/m$^2$, vorzugsweise 600 bis 2000 A/m$^2$, beträgt,

   c) daß die elektrochemische Zelle aus einer Kathode sowie einer Cu/Ta/Pt-Anode besteht und daß eine $HBF_4$-Lösung sowie Blei, Blei enthaltender Abfallstoff und/oder entschwefelte Bleibatterie-Elektrolytpaste als Rohstoffe zur Herstellung eines Elektrolyten verwendet werden, welcher PbO, $Pb(OH)_2$ oder $PbCO_3$ enthält.

2. Verfahren zur Herstellung einer gehärteten Bleibatterieelektrode, in deren aus Blei bestehender Matrix mehrere, in Blei unlösliche, feinteilige Feststoffe dispers verteilt sind, dadurch gekennzeichnet,

   a) daß während einer elektrolytischen Bleiabscheidung die im Elektrolyten gelösten oder suspendierten Feststoffe in die Bleimatrix eingebaut werden und daß durch eine geeignete Ausgestaltung der elektrisch leitenden Oberflächenbereiche der Kathode während der Abscheidung zugleich die Formgebung erfolgt,

   b) daß der Elektrolyt durch Einleiten von Luft durch eine Lochplatte im Boden des Elektrolytgefäßes stark bewegt wird und daß die Stromdichte 100 bis 2000 A/m$^2$, vorzugsweise 600 bis 2000 A/m$^2$, beträgt,

   c) daß die elektrochemische Zelle aus einer Kathode, einem Diaphragma sowie einer Graphit-Anode besteht und daß eine $Fe(BF_4)_2$/$Fe(BF_4)_3$-Lösung sowie Blei, Blei enthaltender Abfallstoff und/oder Bleischrott als Rohstoffe zur Herstellung des Elektrolyten verwendet werden.

3. Verfahren nach Anspruch 1, dadurch gekennzeichnet, daß 50 bis 300 g/l $Pb^{++}$, 50 bis 200 g/l freies $HBF_4$ und 1 bis 5 g/l $H_3PO_4$ im Elektrolyten enthalten sind.

4. Verfahren nach Anspruch 2, dadurch gekennzeichnet, daß 50 bis 200 g/l Pb++, 10 bis 50 g/l Fe++, 0,1 bis 5 g/l Fe+++ und 10 bis 100 g/l freies $HBF_4$ im Elektrolyten enthalten sind.

5. Verfahren nach einem der Ansprüche 1 bis 4, dadurch gekennzeichnet, daß die Stromdichte 1100 bis 2000 A/m² beträgt.

6. Verfahren nach einem der Ansprüche 1 bis 5, dadurch gekennzeichnet, daß durch eine geeignete Formgebung der Kathode oder eine isolierende Abdeckung der Kathode in einem bestimmten Muster der abgeschiedene Werkstoff an den elektrisch leitenden Oberflächenbereichen der Kathode die Form eines Gitters ergibt.

7. Verfahren nach einem der Ansprüche 1 bis 6, dadurch gekennzeichnet, daß dem Elektrolyten Gelatine, Leim, β-Naphtol, Resorzin, Kalziumligninsulfonat und/oder Pepton in einer Konzentration von je 0,1 bis 2 g/l als Additiv zugegeben wird.

8. Verfahren nach Anspruch 7, dadurch gekennzeichnet, daß dem Elektrolyten ein Polyacrylsäureamid in einer Konzentration von je 0,05 bis 5 g/l als zusätzliches Additiv zugegeben wird.

9. Verfahren nach einem der Ansprüche 1 bis 8, dadurch gekennzeichnet, daß als Feststoff die Verbindung $Y_2O_3$, $Al_2O_3$, $ZrO_2$, $SiO_2$, $TiO_2$, SiC, WC, TiC, $BaSO_4$, BN und/oder $Si_3N_4$ in einer Konzentration im Elektrolyten von je 5 bis 150 g/l und/oder das Metall Sn, As, Sb, Bi, Cu, Se, Te und/oder Ag in einer Konzentration im Elektrolyten von je 0,01 bis 5 g/l verwendet wird.

10. Verfahren nach den Ansprüchen 1 bis 8, dadurch gekennzeichnet, daß als Feststoff das Metall Sn, As, Sb, Bi, Cu, Se, Te und/oder Ag in einer Konzentration im Elektrolyten von je 0,01 bis 5 g/l verwendet wird.

11. Verfahren nach Anspruch 9, dadurch gekennzeichnet, daß die Verbindung $Y_2O_3$, $Al_2O_3$, $ZrO_2$, $SiO_2$, $TiO_2$, SiC, WC, TiC, $BaSO_4$, BN und/oder $Si_3N_4$ in einer Korngröße von 0,005 bis 5 µm vorliegt.

12. Verfahren nach einem der Ansprüche 1 bis 11, dadurch gekennzeichnet, daß die elektrolytische Bleiabscheidung bei Temperaturen zwischen 30 und 90°C durchgeführt wird.

13. Verfahren nach einem der Ansprüche 1 bis 12, dadurch gekennzeichnet, daß die Kathode aus einer Platte aus einem elektrischen Isolatorwerkstoff mit darauf aufgebrachten elektrisch leitenden Bahnen besteht, auf denen sich der Bleiwerkstoff abscheidet und deren Anordnung damit die Formgebung bestimmt.

14. Verfahren nach Anspruch 13, dadurch gekennzeichnet, daß als elektrisch leitende Bahn eine Kupfer-Bahn verwendet wird, die durch Auslaugen einer mit einer Maske abgedeckten und auf dem elektrischen Isolatorwerkstoff aufgebrachten Kupfer-Schicht hergestellt wird und wobei die Herstellung der Maske auf phototechnischem Weg erfolgt.

15. Verfahren nach einem der Ansprüche 1 bis 14, dadurch gekennzeichnet, daß die elektrolytisch abgeschiedene, gehärtete Bleielektrode mit reinem Blei nachbeschichtet wird.

**Claims**

1. Method for manufacturing a hardened lead storage battery electrode, finely particulate solids that are insoluble in lead being dispersively distributed in the lead matrix thereof, characterized

    a) in that the solids dissolved or suspended in the electrolyte during an electrolytic lead deposition are incorporated into the lead matrix and in that the shaping ensues at the same time during the deposition due to a suitable fashioning of the electrically conductive surface regions;
    b) in that the electrolyte is highly agitated by introducing air through an apertured plate in the bottom of the electrolyte vessel and in that the current density amounts to 100 through 2000 A/m², preferably 600 through 2000 A/m²;
    c) in that the electrochemical cell is composed of a cathode as well as of a Cu/Ta/Pt anode and in that $HBF_4$ solution as well as lead, waste material containing lead and/or desulfured lead storage battery electrolyte paste are employed as raw materials for the production of an electrolyte that contains PbO, $Pb(OH)_2$ or $PbCO_3$.

2. Method for manufacturing a hardened lead storage battery electrode, finely particulate solids that are insoluble in lead being dispersively distributed in the lead matrix thereof, characterized

    a) in that the solids dissolved or suspended in the electrolyte are integrated into the lead matrix during an electrolytic lead deposition and in that the shaping ensues at the same time during the deposition due to a suitable fashioning of the electrically conductive surface regions of the cathode;
    b) in that the electrolyte is highly agitated by introducing air through an apertured plate in the floor of the electrolyte vessel and in that the current density amounts to 100 through 2000 A/

$m^2$, preferably 600 through 2000 A/m$^2$;

c) in that the electrochemical cell is composed of a cathode, a diaphragm as well as a graphite anode, and in that a $Fe(BF_4)_2/Fe(BF_4)_3$ solution as well as lead, waste material containing lead and/or lead scrap are employed as raw materials for the production of the electrolyte.

3. Method according to claim 1, characterized in that 50 through 300 g/l $Pb^{++}$, 50 through 200 g/l free $HBF_4$ and 1 through 5 g/l $H_3PO_4$ are contained in the electrolyte.

4. Method according to claim 2, characterized in that 50 through 200 g/l $Pb^{++}$, 10 through 50 g/l $Fe^{++}$, 0.1 through 5 g/l $Fe^{+++}$ and 10 through 100 g/l free $HBF_4$ are contained in the electrolyte.

5. Method according to one of the claims 1 through 4, characterized in that the current density amounts to 1100 through 2000 A/m$^2$.

6. Method according to one of the claims 1 through 5, characterized in that, due to a suitable shaping of the cathode or an insulating covering of the cathode in a specific pattern, the deposited material at the electrically conductive surface regions of the cathode yields the shape of a grid.

7. Method according to one of the claims 1 through 6, characterized in that gelatines, glue, β-naphthol, rescorcin, calcium lignin sulfonate and/or peptone is added to the electrolyte as additive in a concentration of 0.1 through 2 g/l each.

8. Method according to claim 7, characterized in that a polyacrylic acid amide as added to the electrolyte as additional additive in a concentration of 0.05 through 5 g/l each.

9. Method according to one of the claims 1 through 8, characterized in that the compound $Y_2O_3$, $Al_2O_3$, $ZrO_2$, $SiO_2$, $TiO_2$, SiC, WC, TiC, $BaSO_4$, BN and/or $Si_3N_4$ in a concentration in the electrolyte of 5 through 150 g/l each and/or the metal Sn, As, Sb, Bi, Cu, Se, Te and/or Ag in a concentration in the electrolyte of 0.01 through 5 g/l each is employed as solid.

10. Method according to claims 1 through 8, characterized in that the metal Sn, As, Sb, Bi, Cu, Se, Te and/or Ag is employed in a concentration in the electrolyte of 0.01 through 5 g/l each.

11. Method according to claim 9, characterized in that the compound $Y_2O_3$, $Al_2O_3$, $ZrO_2$, $SiO_2$, $TiO_2$, SiC, WC, TiC, $BaSO_4$, BN and/or $Si_3N_4$ is present in a grain size of 0.005 through 5 μm.

12. Method according to one of the claims 1 through 11, characterized in that the electrolytic lead deposition is implemented at temperatures between 30 and 90°C.

13. Method according to one of the claims 1 through 12, characterized in that the cathode is composed of a plate of an electrical insulator material with electrically conductive tracks applied thereon, the lead material depositing on said tracks and their arrangement thus defining the shaping.

14. Method according to claim 13, characterized in that copper track is employed as electrically conductive track, this being manufactured by leeching a copper layer that is applied on the electrical insulator material and is covered with a mask, whereby the manufacture of the mask ensues in a phototechnical way.

15. Method according to one of the claims 1 through 14, characterized in that the electrolytically deposited, hardened lead electrode is after-coated with pure lead.

## Revendications

1. Procédé de fabrication d'une électrode durcie pour batterie au plomb, dans la matrice, en plomb, de laquelle sont répartis de façon dispersée plusieurs solides finement divisés, insolubles dans le plomb, caractérisé par le fait que :

a) pendant une déposition de plomb faite par voie électrolytique, les solides, dissous ou mis en suspension dans l'électrolyte, sont intégrés dans la matrice de plomb, et que, par une configuration appropriée des zones de surface, conductrices de l'électricité, de la cathode il s'effectue pendant la déposition en même temps un formage,

b) que l'électrolyte est soumis à un fort mouvement par introduction d'air à travers une plaque perforée, dans le fond du récipient à électrolyte, et que la densité de courant est de 100 à 2000 A/m$^2$, de préférence 600 à 2000 A/m$^2$,

c) que l'élément électrochimique est constitué d'une cathode ainsi que d'une anode Cu/Ta/Pt, et qu'une solution de $HBF_4$, ainsi que du plomb, une substance de déchet contenant du plomb et/ou une pâte d'électrolyte désulfurée de la batterie au plomb sont utilisés comme matières premières pour la fabrication d'un électrolyte, contenant du PbO, $Pb(OH)_2$ ou $PbCO_3$.

2. Procédé de fabrication d'une électrode durcie pour batterie au plomb, dans la matrice, en plomb, de laquelle sont répartis de façon dispersée plusieurs solides finement divisés, insolubles dans la plomb, caractérisé par le fait que :

    a) pendant une déposition de plomb faite par voie électrolytique, les solides, dissous ou mis en suspension dans l'électrolyte, sont intégrés dans la matrice de plomb, et que, par une configuration appropriée des zones de surface, conductrices de l'électricité, de la cathode il s'effectue pendant la déposition en même temps un formage,

    b) que l'électrolyte est soumis à un fort mouvement par introduction d'air à travers une plaque perforée, dans le fond du récipient à électrolyte, et que la densité de courant est de 100 à 2000 $A/m^2$, de préférence 600 à 2000 $A/m^2$,

    c) que l'élément électrochimique est constitué d'une cathode, d'un diaphragme, ainsi que d'une anode au graphite, et que l'on utilise une solution de $Fe(HF_4)_2/Fe(BF_4)_3$, ainsi que du plomb, une substance de déchet contenant du plomb et/ou du déchet de plomb comme matière première pour la fabrication de l'électrolyte.

3. Procédé selon la revendication 1, caractérisé par le fait que de 50 à 300 g par litre de $Pb^{++}$, de 50 à 200 g/l de $HBF_4$ libre et de 1 à 5 g/l de $H_3PO_4$ sont contenus dans l'électrolyte.

4. Procédé selon la revendication 2, caractérisé par le fait que de 50 à 200 g par litre de $Pb^{++}$, de 10 à 50 g/l de $Fe^{++}$, de 0,1 à 5 g/l de $Fe^{+++}$, et de 10 à 100 g/l $HBF_4$ libre sont contenus dans l'électrolyte.

5. Procédé selon l'une des revendications 1 à 4, caractérisé par le fait que la densité de courant est de 1100 a 2000 $A/m^2$.

6. Procédé selon l'une des revendications 1 a 5, caractérisé par le fait que, en adoptant une forme appropriée pour la cathode, ou bien un revêtement isolant pour la cathode, dans un motif déterminé, le matériau déposé sur les zones de surface conductrices de l'électricité de la cathode donne la forme d'une grille/réseau.

7. Procédé selon l'une des revendications 1 à 6, caractérisé par le fait que l'on ajoute à l'électrolyte de la gélatine, de la colle, du β-naphtol, de la résorcine, du sulfonate de calcium-lignine et/ou du Pepton, en une concentration respective de 0,1 à 2 g/l, à titre d'additifs.

8. Procédé selon la revendication 7, caractérisé par le fait qu'on ajoute à l'électrolyte un amide d'acide polyacrylique, en une concentration respective de 0,5 à 5 g/litre à titre d'additif supplémentaire.

9. Procédé selon l'une des revendications 1 à 8, caractérisé par le fait qu'on utilise comme solide la combinaison $Y_2O_3$, $Al_2O_3$, $ZrO_2$, $SiO_2$, $TiO_2$, SiC, WO, TiC, $BaSO_4$, BN et/ou $Si_3N_4$, en une concentration respective dans l'électrolyte de 5 à 150 g/l, et/ou le métal Sn, As, Sb, Bi, Cu, Se, Te et/ou Ag, en une concentration dans l'électrolyte respective de 0,01 à 5 g/l.

10. Procédé selon l'une des revendications 1 à 8, caractérisé par le fait qu'on utilise comme solide le métal Sn, As, Sb, Bi, Cu, Se, Te et/ou Ag, en une concentration respective dans l'électrolyte de 0,01 à 5 g/l.

11. Procédé selon la revendication 9, caractérisé par le fait que la combinaison $Y_2O_3$, $Al_2O_3$, $ZrO_2$, $SiO_2$, $TiO_2$, SiC, WO, TiC, $BaSO_4$, BN et/ou $Si_3N_4$ se présente avec une taille de grains comprise dans la plage allant de 0,005 à 5 μm.

12. Procédé selon l'une des revendications 1 à 11, caractérisé par le fait que la déposition électrolytique du plomb est effectuée à des températures comprises entre 30 et 90°C.

13. Procédé selon l'une des revendications 1 à 12, caractérisé par le fait que la cathode est constituée d'une plaque d'un matériau électriquement isolant, ayant des pistes électriquement conductrices appliquées sur elle, sur lesquelles le matériau de plomb se dépose et dont l'agencement détermine ainsi la configuration.

14. Procédé selon la revendication 13, caractérisé par le fait qu'on utilise, comme piste électriquement conductrice, une plate en cuivre qui est fabriquée par une lixiviation d'une couche en cuivre recouverte d'un masque et appliquée sur le matériau électriquement isolant et la fabrication du masque s'effectuant par voie phototechnique.

15. Procédé selon l'une des revendications 1 à 14, caractérisé par le fait que l'électrode durcie en plomb, déposée par voie électrolytique est revêtue, après coup, de plomb pur.